# EUROPEAN PATENT APPLICATION

(11) **EP 4 807 981 A1**
(43) Date of publication of application: **16.09.2026**
(21) Application number: 25315078.3
(22) Date of filing: 10.03.2025
(51) Int. Cl.: H02P 21/00, H02P 21/20, G06N 3/123

(54) **SYSTEM AND METHOD FOR OPTIMIZING TORQUE MAP MEASUREMENT POINTS**

(71) Applicant: IMRA Europe S.A.S., 06904 Sophia Antipolis (FR)
(72) Inventor: Nakano, Yuta, 06560 Valbonne (FR); Bougnoux, Sylvain, 06220 Vallauris (FR)
(74) Representative: Novagraaf International SA

(57) **Abstract**

The present invention concerns a system for creating a torque map for controlling a motor. The system includes an input module configured to receive or gather design data about the motor including physical design characteristics or nominal characteristics of the motor, an optimization module configured to generate an optimized set of measurement points for a torque measurement program of the motor using a combinatorial optimization method, and an output module configured to treat the optimized set of measurement points for creating the torque map. The system may further include a data acquisition module configured to obtain torque measurement data when running a torque measurement program for the motor. The combinatorial optimization method may comprise a genetic algorithm and use an evaluation method that gives a better score for fewer measurement points and more accurate torque values.

## Description

### FIELD OF INVENTION

The present invention relates to creating torque maps for electrical motor control, and more particularly to a system, method, and computer program product for optimizing measurement points to efficiently create accurate torque maps for controlling motors.

### BACKGROUND

Electric motors are widely used in various applications, from industrial machinery to electric vehicles. Efficient control of these motors is crucial for optimizing performance and energy consumption. One key part in motor control systems is the torque map, which represents the relationship between input currents and output torque for a given motor.

Traditionally, torque maps have been created using mathematical models or simulations. However, these methods often fail to capture the complexities and non-linearities present in real-world motor behaviour. As a result, there has been a shift towards creating torque maps based on actual measurements from physical motors.

The process of creating a torque map through physical measurements involves collecting torque data at various combinations of input currents. This typically requires measuring torque values at numerous points across the operational range of the motor. While this approach can produce accurate torque maps, it presents several challenges.

One challenge is the time-consuming nature of the measurement process. Each measurement point requires setting up specific conditions, such as motor temperature, rotation speed, and input voltage, which can be difficult to maintain consistently across hundreds or thousands of measurements. This can lead to extended testing periods, sometimes lasting several days or even weeks for a single torque map.

It is difficult to determine measurement point pattern and how much points should be measured to make a torque map (Id-Iq space). The prior art methods use a grid pattern with many measurement points (i.e. exhaustive measurement) to achieve a high accuracy torque, as a results, it take long time in the measurement.

Another issue is the trade-off between map accuracy and the number of measurement points. Increasing the number of measurement points generally improves the accuracy of the resulting torque map. However, this also significantly increases the time and resources required for data collection. Conversely, reducing the number of measurement points can speed up the process but may compromise the accuracy of the torque map.

Furthermore, determining the optimal distribution of measurement points across the operational range of the motor is not straightforward. An inefficient distribution may result in oversampling in some areas while undersampling in others, leading to suboptimal use of measurement resources and potentially affecting the overall quality of the torque map.

The document US8410737, also referred as prior art 1, relates to a device and method for generating an initial controller lookup table for an IPM machine. It discloses a method to determine the operational range of look up table for IPM control (Interior Permanent Magnet) . At first, by seeing Ld-Lq (inductance) table and machine parameters, this method compute MTPA (Maximum Torque Par Ampere) trajectory, which defines controllable area on torque map (which is a table of Id, Iq and torque). After drawing the trajectory, it is determined necessary combination of Id and Iq. This prior art has a predetermined torque map as precondition, it means, it does not say anything how to make the torque map itself. In contrast, the present invention is for making the torque map efficiently, so these are completely different.

This prior art 1 as the following drawbacks. In order to take this approach, it is needed to prepare torque map beforehand. This prior art just utilizes the existing torque map (it does not make a torque map itself). In this sense, prior art 1 and 3 are similar. It is in particular mentioned therein that initial table Id, Iq combinations have values covering all possible values for a preset current limit. In contrast, the present invention is a method to make the torque map itself efficiently.

The document US8742705, also referred as prior art 2, relates to an apparatus for operating interior permanent magnet synchronous motor. This document describes a correction unit, that modifies instruction value of current by seeing rotor speed and over-modulated voltage information. This unit is set in feedback loop so that system uses current status information during operation. In fact, predetermined look up tables are not enough for accurate control. As there are many factor that changes current or voltage values, it is not possible to use the instruction current value that is determined originally, especially in the case that the look up tables are made on simulator (because the correction unit can contribute to mitigate the discrepancy between simulator and real machine).

Therefore, this kind of correction unit helps to realize an accurate control by modifying the instruction current value. The instruction current can be determined by the required torque, in conventional method by mathematical approach (equation), and in prior art 2 by look up table. As the conventional mathematical approach is kind of "ideal" case, it cannot deal with disturbances in real world. In contrast, the prior art 2 considers the disturbances by making the look up table via feedback loop. It compensates the difference between real and ideal. But the point is, the prior art 2 does not describe how to make the look up table "efficiently". It mentions that this method is more accurate, but it does not contribute to efficiency of making the look up table. Therefore, the point of invention is different from the present invention in the efficient making of the look up table and torque map.

Further, prior art 2 as the following drawbacks. What this document discloses is kinds of input parameter tuning. It do not improve the quality of loop up table, do not contribute about how to make the look up table.

That is, the present invention approach is to make accurate look up tables by using real machine (not by simulator). The reason why using real machine can make accurate look up table is, experiments and measurements on real machine has already included the factors that change values (described above), therefore, the correction units are not necessary. In contrast, it takes time to make the look up table by real machine compared with by simulator. That's why the present invention realize a method to make these look up tables by real machine more efficiently, which is one of the key point of the present invention.

The document DE102017208429, also referred as prior art 3, discloses a method for the iterative determination of a d- and a q-current for operating a synchronous machine, method for operating a synchronous machine and control unit. This document is about control strategy. The point of this document is to switch MTPA (Maximum Torque Per Ampere) to MTPV (Maximum Torque Per Voltage) if the speed enters into field weakening range. Then, in the mode of MTPA, Id and Iq will be determined by iterative computation.

Prior art 3 has the following drawbacks. This is the method to improve control accuracy, however, it is rather switching algorithm and how to compute current (Id and Iq) value during operation. It do not address the improvement of table itself, such as improving accuracy of table and making the table more efficiently.

The document "Control of Permanent Magnet Synchronous Motors" from Sadegh Vaez-Zadeh, OXFORD Academic is available e.g. on the web page https://academic.oup.com/book/26764, and is also referred as prior art 4.

This document is a text book for controlling PMSM (Permanent Magnet Synchronous Motor).

Prior art 4 has the following drawbacks. Even this kind of reliable text book, there are few description how to make torque map, especially from real measurement data - how many points are needed to measure the torque value and which pattern of measurement point is efficient to make the map. These points are addressed by the present invention.

It has been appreciated that a measurement point optimization system is needed that overcomes one or more of these problems and drawbacks.

### SUMMARY

In a first aspect, the invention relates to a system for creating a torque map for controlling a motor. The system comprises : an input module configured to receive or gather design data about the motor including physical design characteristics of the motor or nominal characteristics of the motor, an optimization module configured to generate an optimized set of measurement points for a torque measurement program of the motor, and an output module configured to treat the optimized set of measurement points for creating the torque map, wherein the optimization module uses a combinatorial optimization method to generate the optimized set of measurement points.

This system enables efficient creation of accurate torque maps for motor control by optimizing the measurement points, reducing the time and resources required for torque mapping while maintaining map accuracy.

The present invention will be further commented with respect to the above mentioned prior art documents.

Prior art 1 defines an operational range on the torque map by using MTPA. It means, it is a method after having prepared a torque map, in other words, it is a method how to utilize a torque map. It is not a method how to make a torque map. In contrast to prior art 1, the present invention is a method for making the "torque map" efficiently. If we can have information of the MTPA and so on, we can focus the range of Id-Iq combination..

The present invention is for making the torque map with fewer combination of Id-Iq. This is because we have used the past data of the table, so we at least roughly know the shape of torque map. By using this prior knowledge, we can reduce the number of the combination, it means that we can make the table efficiently. For making the prior knowledge, we use the combinatorial optimization method, in particular with its training on past data. To optimise a combination, we use a training data composed of past data.

Further, prior art 2 tries to control a motor with not so accurate look up table, that's why there is a need for the correction unit.

However, the present invention is directed to make an accurate table that does not need any correction, while reducing the time to make it and to be more specific, to reduce the measurements to make the table.

One key point of the present invention is to make the table more efficiently (with fewer measurement time).

The point of prior art 2 is the correction unit, even if there is a discrepancy between real system and prepared table (e.g. made by simulator), it works thanks to the correction.

In contrast, the present invention makes the table directory from real machine, therefore, there is no need to think of the correction, while there is a need to reduce the time it takes to make the table due to measurement time. The present invention is useful because it can make same or better quality of the table with fewer measurement time.

The purpose of prior art 3 is different from the present invention. We are addressing the improvement of the quality of look up table that is used in control algorithm, and/or make the table more efficiently.

Prior arts 1-4, and in particular Prior art 4, do not describe how to make torque map, especially from real measurement data and how many points are needed to measure the torque value and which pattern of measurement point is efficient to make the map.

However, this point is necessary in the manufacturing of motor and its controller.

The present invention focus on the solution for the motor's manufacturing companies.

The invention can also be defined according to the following features, taken individually or in combination.

Advantageously, the system may further comprise a data acquisition module configured to obtain torque measurement data when running a torque measurement program for the motor, the torque measurement data including torques and current values, preferably current decomposition values.

The motor could be controlled with a Field-Oriented method for e.g. PMSM (Permanent magnet synchronous machine field-oriented control). It is possible to implement a field-oriented control structure for a permanent magnet synchronous machine (PMSM). Field Oriented Control (FOC) is a performant AC motor control strategy that decouples torque and flux by transforming the stationary phase currents to a rotating frame. It is possible to use FOC when rotor speed and position are known and your application requires: High torque and low current at startup, and High efficiency. Reference is made to known methods in e.g.
https://fr.mathworks.com/help/sps/ref/pmsmfieldorientedcontrol.html and https://ww1.microchip.com/downloads/aemDocuments/documents/MCU32/Applicati onNotes/ApplicationNotes/Sensorless-Field-Oriented-Control-for-a-Permanent-Magnet-Synchronous-Motor-Using-Sliding-Mode-DS00004398.pdf about Sensorless Field Oriented Control for a Permanent Magnet Synchronous Motor Using Sliding Mode Observer from Microchip.

Including a data acquisition module allows for direct integration of real-world measurement data into the torque map creation process, enhancing the accuracy and applicability of the resulting map.

Advantageously, the combinatorial optimization method may comprise a genetic algorithm.

Utilizing a genetic algorithm for optimization enables the system to efficiently explore a large solution space and converge on an optimal set of measurement points, adapting to the specific characteristics of different motors.

Advantageously, the optimization module may be configured to use an evaluation method that gives a better score for fewer measurement points and more accurate torque values.

Advantageously, the evaluation method has a fitness function.

Advantageously, the fitness function (to compute training progress index) is equal to ${w}_{t} ∗ \frac{1}{{sub}_{t}} + {w}_{n} ∗ \frac{1}{num _ points}$ wherein
*subₜ* is computed from the difference from ground truth (subtraction between computed value and ground truth). As *subₜ* locates as a denominator, smaller difference gives larger value. It means, if the difference from ground truth is smaller, we get high score;
*num_points* is computed from number of measurement points used in optimized pattern. As *num_points* locates as a denominator, smaller number of points gives larger value. It means, if the used number of points in pattern is smaller, we get high score;
*wₜ* is weight value who represents how much prioritize to the difference from ground truth, whose range is from 0.0 to 1.0;
*wₙ* is weight value who represents how much prioritize to number of points, whose range is from 0.0 to 1.0;
*wₜ* and *wₙ* are for taking balance, to control which parameters (accuracy or number of measurement points) should be prioritized

This evaluation method ensures that the optimization process balances the need for accuracy with the desire to minimize the number of measurement points, resulting in an efficient and precise torque mapping process.

Advantageously, the optimization module may be configured to input design data of the motor such as physical design characteristics of the motor, nominal torque, nominal current and/or a previously measured pattern, and output the optimized set of measurement points.

By incorporating various types of motor design data into the optimization process, the system can tailor the measurement point selection to the specific characteristics of each motor, improving the relevance and accuracy of the resulting torque map.

In a second aspect, the invention concerns a method for reducing torque measurement points in creating a torque map for controlling a motor. The method comprises the steps consisting of: retrieving design data of the motor including physical design characteristics of the motor or nominal characteristics of the motor, optimizing a pattern of measurement points to reduce a number of measurement points, preferably while maintaining torque map accuracy, and outputting the optimized measurement point pattern, wherein optimizing the pattern of measurement points comprises using a combinatorial optimization method.

This method allows for the creation of accurate torque maps with fewer measurement points, reducing the time and resources required for motor characterization while maintaining the quality of the resulting map.

Advantageously, the method comprises the step of :
- retrieving one full (or almost complete or guessed or pre-optimized) set of measurement points (or doing a full pattern).

Advantageously, the method may further comprise the step consisting of receiving torque measurement data comprising current decomposition values.

Incorporating actual torque measurement data into the method enhances the accuracy of the torque map by basing it on real-world performance data of the motor.

Advantageously, the combinatorial optimization method may comprise a genetic algorithm.

Using a genetic algorithm for optimization enables the method to efficiently explore various measurement point patterns and converge on an optimal solution, adapting to the specific characteristics of different motors.

The method may further comprise the step of using an evaluation method that gives a better score for fewer measurement points and more accurate torque values.

This evaluation approach ensures that the optimization process balances the need for accuracy with the goal of minimizing the number of measurement points, resulting in an efficient and precise torque mapping process.

Advantageously, the method may further comprise the step of creating a torque map using the optimized measurement point pattern.

Creating the torque map using the optimized measurement points allows for the generation of an accurate and efficient representation of the motor's torque characteristics, suitable for use in motor control applications.

In other words, the invention relates to "off-line" optimization based on past measurements training (we evaluate the pattern by using past data) and optimization and "on-line" application with the use of the pattern to create the torque map and control the motor.

Advantageously, the combinatorial optimization method may comprise simulated annealing, particle swarm optimization, or ant colony optimization algorithms, so as to generate the optimized set of measurement points.

In a third aspect, the invention concerns a method for controlling a motor using the created torque map according to the preceding aspect.

Utilizing the created torque map for motor control demonstrates the practical application of the optimized torque mapping process, enabling improved motor performance and efficiency.

In a fourth aspect, the invention concerns a computer program product comprising instructions which, when executed on a computer, cause the computer to carry out the method of reducing torque measurement points in creating a torque map for controlling a motor and the method of controlling the motor with the created torque map.

Providing the method as a computer program product allows for easy distribution and implementation of the torque map creation process across various computing platforms and motor control systems.

The instructions may be stored on a non-transitory computer-readable storage medium.

Storing the instructions on a non-transitory computer-readable storage medium ensures the longevity and portability of the computer program product, facilitating its use in various motor control applications and environments.

In a further aspect, the invention concerns all the aspect described above (system, methods, computer program, use) directed to temperature optimization of the motor during the test period. The further aspect relates to another or further issue, that is, depending on the position of measurement point, necessary time for measurement is different. To be more specific, the measurements points who need high current takes more measurement time, because the temperature of motor (in particular coil(s)) gets higher. As explained above, we need to prepare same condition (motor temperature, rotation speed, etc.) in each measurement. Therefore, increase of motor temperature due to high current measurement make us waiting until the motor is cooled down (i.e. waiting/cooling time to start next measurement point). As a result, it takes much time compared with low current measurement.

That is, in the further aspect, the invention relates to a system for creating a torque map for controlling a motor. The system comprises : an input module configured to receive or gather design data about the motor including physical design characteristics of the motor or nominal characteristics of the motor, an optimization module configured to generate an optimized set of measurement points for a torque measurement program of the motor, and an output module configured to treat the optimized set of measurement points for creating the torque map, wherein the optimization module uses a combinatorial optimization method, preferably a genetic algorithm, to generate the optimized set of measurement points, wherein the optimization module uses (an evaluation method with) regularization terms who gives penalty depending on current value.

Advantageously, the optimization module may be configured to use an evaluation method that gives a better score for fewer measurement points and more accurate torque values.

Advantageously, the evaluation method is a fitness function.

Advantageously, the fitness function (to compute training progress index) is equal to ${w}_{t} ∗ \frac{1}{{sub}_{t}} + {w}_{n} ∗ \frac{1}{num _ points} + {w}_{i} ∗ \frac{1}{\left|I\right|}$ wherein the terms further refer to :
|/| is computed from current value (absolute value). As "|/|" locates as a denominator, smaller current value gives larger value. It means, if absolute current value is smaller, we get high score;
*wᵢ* is weight value who represents how much prioritize to current value, whose range is from 0.0 to 1.0.

Considering this issue, we added an additional term (i.e. last term) to the equation. The role of the additional term is to avoid to use measurement points who require high current.

Thanks to the modification of equation, even the same number of measurement points, it is possible to reduce the points who need high current.

It is possible to couple the evaluation method that gives a better score for fewer measurement points and more accurate torque values and the evaluation methods using regularization terms who gives penalty depending on current value. It that case, it is possible to either couple with a liner function having weighting coefficients, e.g. from 0 to 1, with a non-liner function, e.g. quadratic, polynomial or any other numerical function.

That is, in the further aspect, the invention relates to a method for reducing torque measurement points in creating a torque map for controlling a motor. The method comprises the steps consisting of: retrieving design data of the motor including physical design characteristics of the motor or nominal characteristics of the motor, optimizing a pattern of measurement points to reduce a number of measurement points, preferably while maintaining torque map accuracy, and outputting the optimized measurement point pattern, wherein optimizing the pattern of measurement points comprises using a combinatorial optimization method, preferably a genetic algorithm, and using (an evaluation method with) regularization terms who gives penalty depending on current value.

This allows to have the mentioned advantages.

### BRIEF DESCRIPTION OF FIGURES

Embodiments of the invention will be described, by way of non-limiting example, with reference to the following drawings, in which:
- FIG. 1 depicts graphs showing a torque map and measurement points for motor control, according to aspects of the present invention,
- FIG. 2a-2b illustrate flowcharts of a Genetic Algorithm process for optimizing measurement point patterns, according to an embodiment,
- FIG. 3a-3e shows results and performance of the Genetic Algorithm for the optimization process of torque map measurement points, according to aspects of the present invention,
- FIG. 4 shows an initial pattern with no optimization and a optimized pattern,

Common reference numerals are used throughout the figures to indicate similar features.

### DETAILED DESCRIPTION

The system for creating a torque map for controlling a motor may utilize a two-dimensional representation of torque values based on current components.

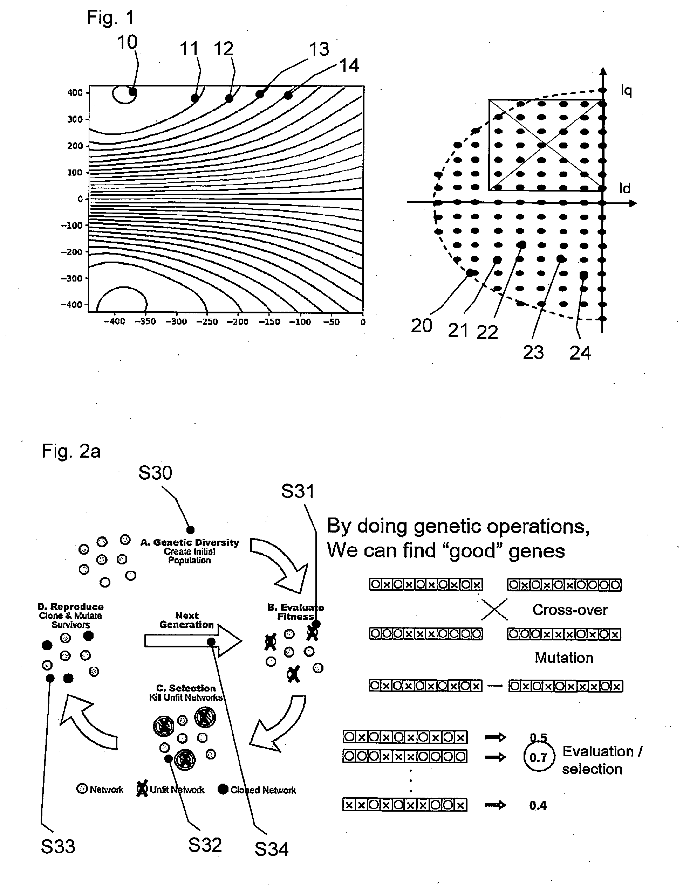

FIG. 1 illustrates this concept, showing a torque map on the left side and a corresponding measurement point pattern on the right side.

The torque map in FIG. 1 is constructed with the direct-axis current Id, also called d-axis current, related to flux current, plotted along the horizontal axis and the quadrature-axis current Iq, also called q-axis current, related to torque current, plotted along the vertical axis.

These currents, Id and Iq, are decomposed values derived from the total current supplied to the motor. Within this two-dimensional space, torque values are represented by isolines of values of torque 10, 11, 12, 13, 14.

To create an accurate torque map, the system employs an input module configured to receive or gather design data about the motor. This design data may include physical design characteristics of the motor or nominal characteristics of the motor or references of the motor. The input module processes this information to establish the framework for the torque map.

The right side of FIG. 1 displays a measurement point pattern (i.e. set of measurement points) overlaid on the Id-Iq coordinate system. Each dot 20, 21, 22, 23, 24 in this pattern represents a specific combination of Id and Iq values at which torque measurements are taken. The arrangement of these measurement points is crucial for capturing the motor's torque characteristics across its operational range.

In contrast to simulation-based approaches, the system measures torque values on a real machine. This method accounts for real-world factors such as manufacturing variations, material properties, and environmental conditions that may not be accurately represented in simulations. By using actual measurements, the system creates a torque map that more closely reflects the true performance of the motor.

Once the measurements are complete, the system utilizes an output module configured to treat the set of measurement points for creating the torque map. This module processes the raw measurement data, interpolating between measured points to generate a comprehensive torque map that covers the entire operational range of the motor. The treatment may refer to simply save or transfer of the result to another equipment or, in a preferred manner, to manage or interpolate the values of the optimized set of measurement points so as to create the torque map.

The resulting torque map serves as a valuable tool for motor control, allowing for precise torque output prediction based on the applied current components. This map forms the foundation for advanced motor control strategies, enabling efficient and accurate operation across various operating conditions.

The system further comprises an optimization module configured to generate an optimized set of measurement points for a torque measurement program of the motor. The optimization module uses a combinatorial optimization method to generate the optimized set of measurement points.

For example, only removing the measurement points / dots on the top part of the graph in right side of FIG. 1 will not give accurate results or will still need a lot of measurement points. To make an accurate torque map without knowing any special measurement pattern, it is necessary to have "enough fine" measurements. But some of the measurements are heavily overlapped. The optimization of the present invention is, in other words, by using minimum number of measurement points, it is possible to achieve required accuracy.

In other words, the present invention can be explained as follows. The torque map which is used in motor control is defined as a 2D map, shown as in FIG.1. Horizontal axis is Id, and vertical axis is Iq (Id and Iq are decomposed values from current). For each Id-Iq combination, a torque value exists. In FIG.1, the isolines represents torque value. By using this map, we can know the relationship between torque and Id-Iq, it means that we can control output torque by operating Id-Iq. This torque map can be created on simulator, in other word, by mathematical equations. However, it is not so accurate in "real machine (motor)" control because there are many noises, sensor error, unexpected/unexplained phenomenon on real machine. That's why, the present invention measures torque value on real machine (not on simulator), then makes the torque map. By using the measurement values on real machine, above issues such as noises and sensor error should be included. Finally, the map can work on real machine operation.

It is really time consuming to do the measurement on real machine for the full torque map and it is complicated because it is needed to conduct measurements in same condition, in same motor temperature, at same rotation speed, same input voltage, etc. Even though it is necessary to measure several hundreds or thousands times to make one full torque map / full pattern of measurement points, it is necessary to prepare same condition at each time. As a result, it may take several days or one week just for the measurements of one full torque map / full pattern of measurement points.

In order to solve above issue, the present invention uses a combinatorial optimization method for reducing measurement points with keeping the quality (accuracy) of map. To be more specific, we use a Genetic Algorithm (GA), which is one of evolutionary computation and it can optimize measurement point pattern. This technology can find a pattern with fewer points than original but with same level of accuracy.

FIG. 2a-2b illustrate the process of optimizing measurement point patterns using a genetic algorithm, GA.

A classic example of genetic algorithm is the Knapsack problem. An example of the Knapsack problem is disclosed in https://medium.com/koderunners/genetic-algorithm-part-3-knapsack-problem-b59035ddd1d6.

Further, FIG. 2a depicts the general GA process. The process begins with an initial population of potential solutions, which in this case represents different patterns of measurement points. The are several possibilities to create the initial population such as by experience, by past data of torque maps, by initial pitch grid or randomly. The initial population is preferably created randomly; this allows to limit effort, in particular implementation effort and calculation effort. The GA then applies genetic operations comprising reproduction, cross-over, mutation and/or multi-parent recombination to create new generations of solutions.

The present method may comprise a step with an evaluation phase where each solution in the population is assessed based on predefined criteria. Following the evaluation, the method may comprise a step with a selection phase where the most promising solutions are chosen to form the next generation.

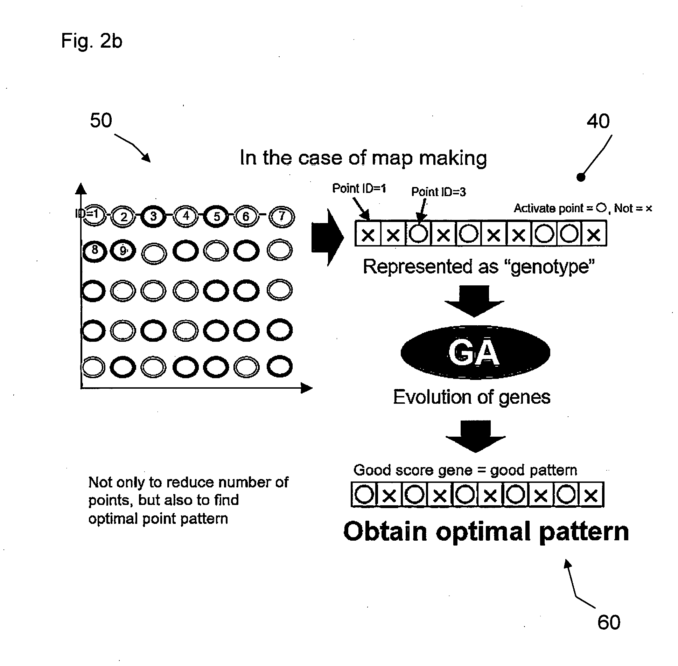

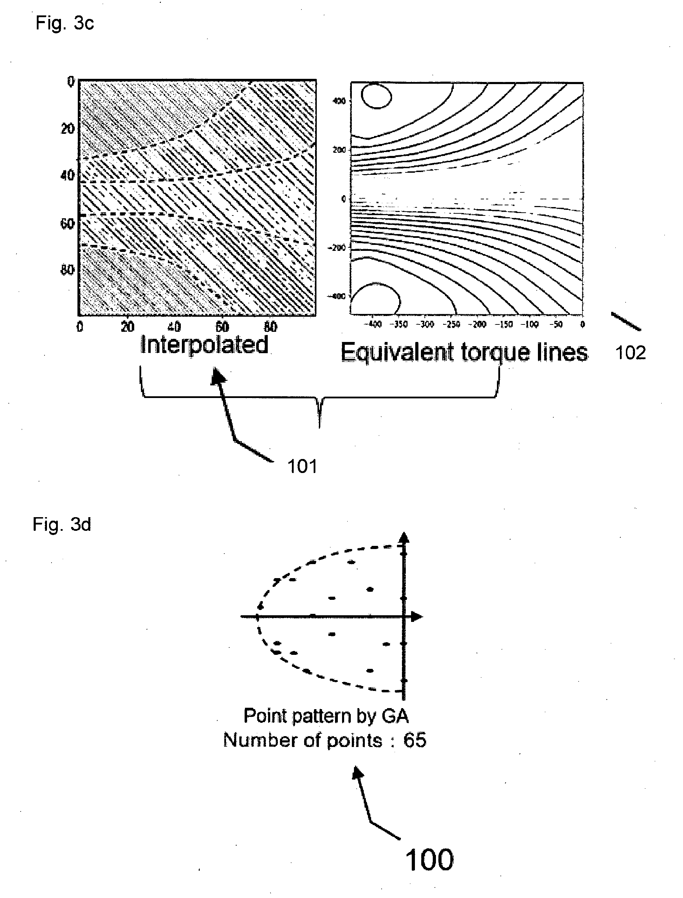

The present invention will need to encode or describe the problem and/or the solution in a genetic form 40 (or genotype 40) as shown in FIG. 2b, such as a string of values 40. The order in the string will represent a measurement point pattern (see also item 100 in fig. 3d and item 50 in fig. 2b). This may also represent the Id and Iq and the value will be the torque and/or the torque accuracy. In the present case, we can describe the torque map or pattern in Id and Iq and gene description as shown in FIG.2b, thereby having a genetic torque map 50. With a good score of gene, we have a good pattern in the torque map, thereby having an optimized genotype 60 (or optimized genetic form 60 or an optimized string 60). This lead not only to reduce the number of points to be measured but also to find optimized point pattern. In other words, first of all, each character in the genotype 40 represents each point in the genetic torque map 50, it means, each character "O" (activate) and "X" (disactivate) in the genotype 40 is assigned to a measurement point. Therefore, each point in the genetic torque map 50 has an identifier ID "ID=1, 2, , ,", this means ID of measurement point. In other words, each character in the genotype 40 represents one combination of Id and Iq. It means, each character is one plot in Id-Iq space. Then, torque map is made by interpolation (like 101 in Fig. 3c), and finally, it is evaluated by the fitness function.

In other words, there is a need to have a generic representation of the problem to be solved and/or the solution. The steps of the GA relates :
- a) creating an initial population or an initial genetic diversity (step S30),
- b) evaluating the fitness of the population (step S31),
- c) selecting and remove unfit part of population (step S32),
- d) creating next generation(s) (step S33), by e.g. reproduce, clone, mutate, cross-over, parent or multi-parent recombine the population or a part thereof,
- e) repeating steps starting from b), i.e. iterations, (step S34).

That is, by doing genetic operations, we can find good genes having an optimal or optimized pattern.

In FIG. 2b, the application of the GA process to torque map measurement point optimization is shown. The optimization module uses a combinatorial optimization method, specifically a genetic algorithm, to generate the optimized set of measurement points.

The optimization module is configured to input design data of the motor such as physical design characteristics of the motor, nominal torque, nominal current and/or a previously measured pattern. This data serves as the basis for initializing the GA process.

In the context of torque map optimization, each "genotype" in the GA represents a specific pattern of measurement points defined by Id and Iq values, which are derived from decomposition of current. The GA evolves these patterns over multiple generations, aiming to reduce the number of measurement points while maintaining the accuracy of the torque map.

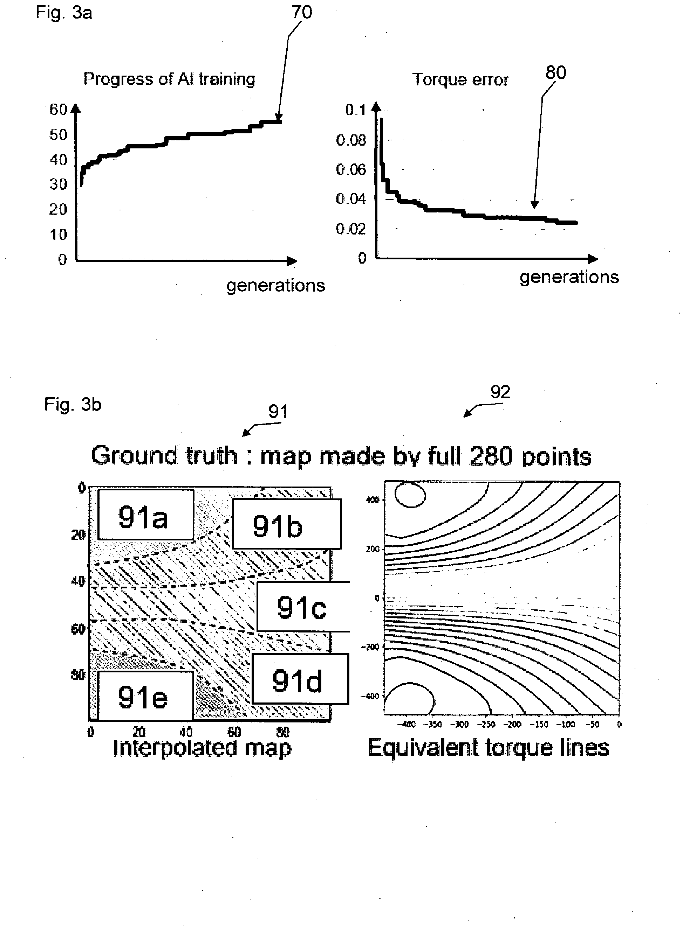

. The optimization module uses a fitness function to evaluate measurement point patterns, in particular a fitness function giving better scores for fewer points and more accurate torque. This fitness function guides the selection process in the above step, ensuring that each subsequent generation moves towards an optimal solution. The transition of fitness represents the progress of training (e.g. 70 in fig. 3a). The fitness refers to the value and the fitness function refers to the example of equation described herein.

In the computation of GA, it is possible to use the following equation, which gives better score on fewer points and more accurate torque:

Fitness function (to compute training progress index) = ${w}_{t} ∗ \frac{1}{{sub}_{t}} + {w}_{n} ∗ \frac{1}{num _ points}$

By using this equation, GA can optimize measurement point pattern by reducing number of points but with keeping toque accuracy.

Thanks to the present invention, we can reduce the number of measurement points while keeping an acceptable torque error. For example, it is possible to reduce by e.g. more than 80% the measurement points with e.g. less than 1% of torque error, in a case of a full torque map having 500 measurement points.

The system may use past data of torque maps to inform the optimization process. This prior knowledge allows the GA to start from a more informed initial population and potentially converge on an optimal solution more quickly.

After multiple generations of evolution/creation of new generations, evaluation/fitness, and selection, the optimization module is configured to output the optimized set of measurement points. This optimized pattern or set of measurement points represents a reduced number of measurement points that can still produce an accurate torque map.

The method of optimizing the measurement point pattern comprises retrieving design data of the motor including physical design characteristics or nominal characteristics. This data is used to initialize the GA process and define the constraints within which the optimization occurs.

The method further comprises optimizing a pattern of measurement points to reduce a number of measurement points. This optimization is achieved through the iterative GA process, where each generation potentially improves upon the previous one in terms of reducing point count while maintaining accuracy.

Upon completion of the optimization process, the method comprises outputting the optimized measurement point pattern. This optimized pattern can then be used for creating a more efficient torque measurement program for the motor.

FIG. 3a-3e illustrates the results and performance of the GA based optimization process for torque map measurement points. FIG. 3a displays the progress of the GA training (i.e. next generation(s) iteration(s)), torque error reduction, and a comparison between the ground truth and the optimized results. If motor type is similar (e.g. similar IPM, torque output, etc), we can say that the surface (curve) of torque value is similar. It means, same measurement pattern can be applied between similar motors. Therefore, by using past data of same type of motor, we can conduct optimization. In summary, we do optimization by using past measurement data and ground truth of the past data. Then, once the optimization is done, we applied the optimized measurement pattern to a new motor.

The left graph in FIG. 3a shows the progress of GA training over 3000 generations. The training progress curve 70, being fitness values computed by the equation in this embodiment, demonstrates a regular increase, indicating continuous improvement in the optimization metric as the genetic algorithm evolves the measurement point patterns.

Adjacent to the training progress graph, the torque error 80 represented in the graph depicts a decrease in error over 3000 generations. This reduction in torque error signifies an improvement in the accuracy of the optimization process as the genetic algorithm refines the measurement point pattern.

FIG. 3b contains a "ground truth" box with two reference maps from a full / complete set of measurements taking long time: an interpolated map 91 showing torque values with areas 91a, 91b, 91c, 91d, 91e, and equivalent torque lines 92 displaying contour lines of equal torque values. These serve as a baseline for comparing the optimized results. Note that the transition between the areas 91a-91e can be smooth, and also the values inside the areas that can be gradual or smooth. That is, preferably, there is a continuum of values in the torque values. In an example, the torque value in the area 91e is lower than in the areas 91d, which is lower than in the area 91c, which is lower than in the area 91b, which is lower than in the area 91a. Similar areas applies for torque map 101 here after in fig. 3c.

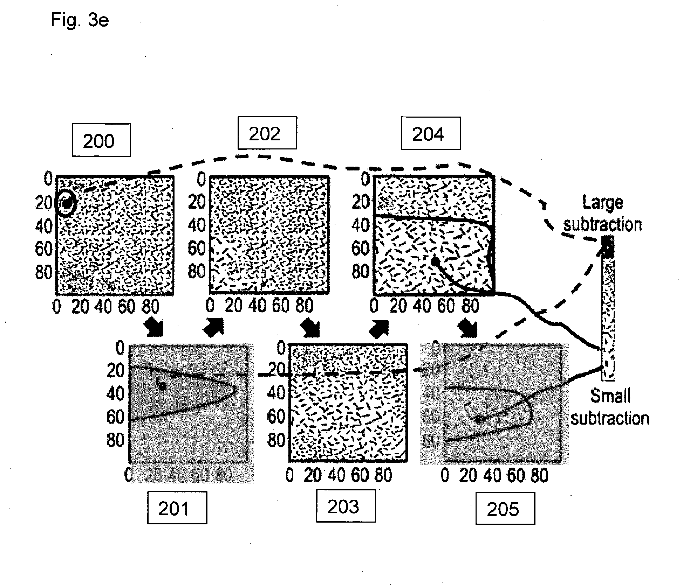

After GA training, FIG. 3 presents three key outputs:
1. A point pattern generated by the genetic algorithm, showing 65 (or any other number, such as e.g. 36) optimized measurement points.
2. An interpolated torque map created from these optimized points.
3. Equivalent torque lines derived from the interpolated map.

The optimization process reduces the number of measurement points from e.g. an initial 500 to 36, representing more than 80% reduction. Despite this significant decrease in measurement points, the present invention maintains a torque error of less than 1% compared to the ground truth. It is reminded that example of ground truths are real and full torque map for an existing motor.

The data acquisition module of the system obtains torque measurement data when running a torque measurement program for the motor. This data includes torques and current values, specifically current decomposition values (Id and Iq).

The optimization module uses an evaluation method that assigns better scores to patterns with fewer measurement points and more accurate torque values. This evaluation guides the genetic algorithm towards solutions that balance efficiency and accuracy.

The interpolated torque map 101 in fig. 3c is generated from the optimized measurement points and closely resembles the ground truth interpolated map 91 in fig. 3b, as evidenced by the similarity in area patterns and equivalent torque lines (see lines). Further, the same applies to the optimized equivalent torque map 102 (in fig. 3c) in comparison to the ground truth equivalent toque lines 92 (in fig. 3b). This demonstrates that the reduced set of measurement points can effectively capture the motor's torque characteristics across its operational range.

FIG. 3e displays a series of six smaller torque maps, arranged in a grid pattern. These maps represent different variations or iterations of the optimization results, providing insight into the range of solutions explored by the genetic algorithm. This figure shows, by using Genetic Algorithm approach, output torque map 200, 201, 202, 203, 204, 205 improves evolutionally. These six figures represent torque maps 200, 201, 202, 203, 204, 205 created in different generation from 0, 500, 1000, 1500, 2500, 3000, for example. The older in generation, the more the map 200, 201, 202, 203, 204, 205 becomes close to ground truth. As training progress curve 70 and torque error 80 in Fig. 3a show, fitness value increases and torque error decreases gradually (i.e. generation by generation). This is the point of evolutionally computation such as genetic algorithm. By changing generation using genetic operators such as crossover and other mentioned herein, we can get better result. In this case, better result means lower torque error (and/or fewer measurement points). It means, low/small subtraction (difference between ground truth and created torque map) is better than large subtraction.

The optimized measurement point pattern 100 (visible in fig. 3d) can be used to create a torque map for motor control. This map serves as a basis for controlling the motor, allowing for efficient operation across various conditions while minimizing the time and resources required for data acquisition.

A computer program product comprising instructions stored on a non-transitory computer-readable storage medium can be used to implement the optimization method. When executed on a computer, these instructions cause the computer to carry out the optimization process, including receiving torque measurement data, applying the genetic algorithm, and outputting the optimized measurement point pattern.

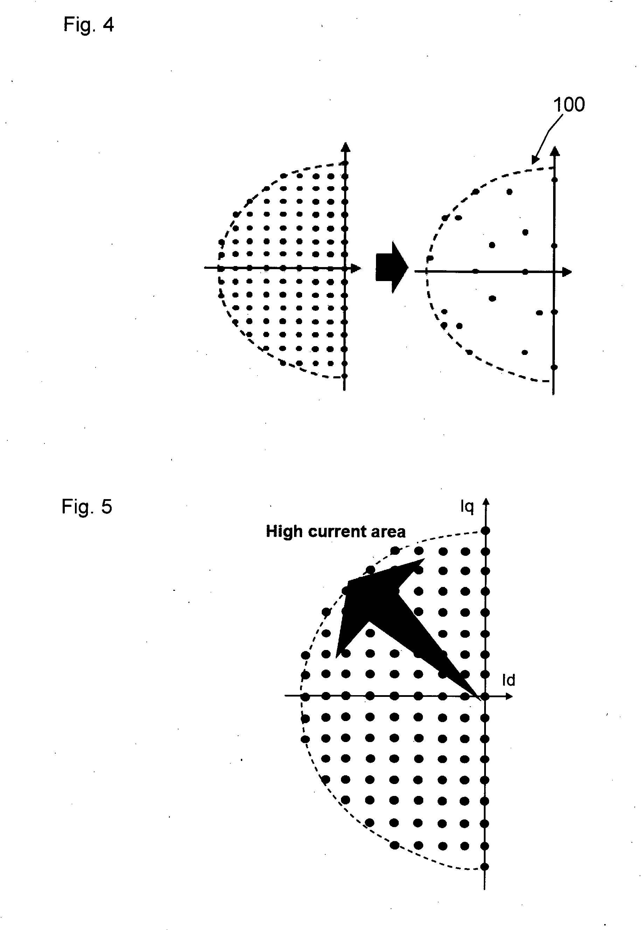

FIG. 4 shows an initial pattern with no optimization, that is to say with full measurement (see left side) and the optimized pattern 100, with reduced and optimized measurement (see right side).

FIG. 5 shows a pattern of measurement points with respect to the further aspect of temperature management and waiting time for cooling the motor.

The pattern of measurement points is shown in with an arrow indicating high current area. Note it is possible to have another arrow at e.g. 7.30 o'clock, that is to say with high value of Iq also in negative term. This is because the current value relating to temperature increase is "absolute value", it means |/|.

The further away from the origin, the higher the current value. That is, the more the motor temperature increases.

The outer measurement points (close to dashed line) contribute to the accuracy of torque map.

However, these outer points require high current.

It causes motor temperature increase, as a result it takes time in measurement because we need to wait for motor cool down for next measurement (to prepare same condition).

In that case, we can use regularization terms who gives penalty depending on current value, with the optimization process presented herein, in particular with the use of the genetic algorithm.

To be more specific, we can adapt the fitness function (to compute training progress index) which is equal to ${w}_{t} ∗ \frac{1}{{sub}_{t}} + {w}_{n} ∗ \frac{1}{num _ points} + {w}_{i} ∗ \frac{1}{\left|I\right|}$

Thereby, we can obtain an optimized pattern of measurement points with the advantages described herein.

Finally, the system and methods described may be adapted to accommodate various alternatives and variants.

In some aspects, the optimization module may utilize different combinatorial optimization techniques beyond genetic algorithms. For example, simulated annealing, particle swarm optimization, or ant colony optimization algorithms may be employed to generate the optimized set of measurement points.

The system may, in some cases, incorporate support vector machines to enhance the prediction of torque values between measured points. This approach may potentially further reduce the number of required measurement points while maintaining or improving map accuracy.

In some implementations, the system may adapt to different motor types and configurations. For instance, the optimization process may be tailored for synchronous reluctance motors, induction motors, or permanent magnet synchronous motors, each with their unique torque characteristics and operational constraints. One of the target of the present invention is IPM machine and induction motor. We can use this invention also on both and other type of motors (train GA for each type of motor).

The data acquisition module may, in some variants, integrate with various sensor technologies. For example, high-precision torque sensors, Hall effect sensors, or resolver-based systems may be used to gather more accurate or diverse data during the measurement process.

In certain aspects, the system may incorporate real-time adaptation capabilities. As the motor operates, the torque map may be continuously refined based on operational data, allowing for dynamic optimization of motor control parameters.

The evaluation method used by the optimization module may, in some implementations, include additional criteria beyond the number of measurement points and torque accuracy. For instance, factors such as motor efficiency, thermal considerations, or noise reduction may be incorporated into the fitness function.

In some variants, the system may utilize parallel processing techniques to accelerate the optimization process. Multiple genetic algorithm instances may run simultaneously on different processor cores or distributed computing systems, potentially reducing the time required to converge on an optimal solution.

The output module may, in certain implementations, generate multiple torque maps optimized for different operational scenarios. For example, separate maps may be created for high-speed operation, high-torque conditions, or energy-efficient modes, allowing for more specialized motor control strategies.

In some aspects, the system may incorporate a user interface that allows operators to interactively adjust optimization parameters or visualize the torque mapping process in real-time. This feature may enable fine-tuning of the optimization process based on specific application requirements or expert knowledge.

The computer program product may, in some variants, be implemented as a cloud-based service, allowing for remote optimization and analysis of torque mapping data across multiple motor installations. This approach may facilitate the sharing of optimization strategies and benchmarking across different motor applications.

The system and method described provide an efficient approach to creating accurate torque maps for motor control while significantly reducing the number of required measurement points. This optimization can lead to time and cost savings in motor characterization and control system development.

Features of any of the examples or embodiments outlined above may be combined to create additional examples or embodiments without losing the intended effect.

It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A system for creating a torque map for controlling a motor, the system comprising :
- an input module configured to receive or gather design data about the motor including physical design characteristics of the motor or nominal characteristics of the motor,
- an optimization module configured to generate an optimized set of measurement points for a torque measurement program of the motor;
- an output module configured to treat the optimized set of measurement points for creating the torque map,
wherein the optimization module uses a combinatorial optimization method to generate the optimized set of measurement points.

2. The system of claim 1, further comprising :
- a data acquisition module configured to obtain torque measurement data when running a torque measurement program for the motor, the torque measurement data including torques and current values, preferably current decomposition values.

3. The system of any of claims 1 or 2, wherein the combinatorial optimization method comprises a genetic algorithm.

4. The system of any of claims 1 to 3, wherein the optimization module is configured to use an evaluation method that gives a better score for fewer measurement points and more accurate torque values.

5. The system of any of claims 1 to 4, wherein the optimization module is configured to :
- input design data of the motor such as physical design characteristics of the motor, nominal torque, nominal current and/or a previously measured pattern,
- output the optimized set of measurement points.

6. The system of any of claims 1 to 5, wherein the optimization module is configured to use regularization terms who gives penalty depending on current value.

7. A method for reducing torque measurement points in creating a torque map for controlling a motor, the method comprising the steps consisting of :
- retrieving design data of the motor including physical design characteristics of the motor or nominal characteristics of the motor,
- optimizing a pattern of measurement points to reduce a number of measurement points, preferably while maintaining torque map accuracy; and
- outputting the optimized measurement point pattern,
wherein optimizing the pattern of measurement points comprises using a combinatorial optimization method.

8. The method of claim 7, further comprising the step consisting of:
- receiving torque measurement data comprising current decomposition values.

9. The method of any one of claims 7 to 8, wherein the combinatorial optimization method comprises a genetic algorithm.

10. The method of any of claims 7 to 9, further comprising the step of:
- using an evaluation method that gives a better score for fewer measurement points and more accurate torque values.

11. The method of any of claims 7 to 10, further comprising the step of using regularization terms who gives penalty depending on current value.

12. The method of any of claims 7 to 11, further comprising the step of:
- creating a torque map using the optimized measurement point pattern.

13. A method for controlling a motor using the created torque map according to the preceding claim.

14. A computer program product comprising instructions which, when executed on a computer, cause the computer to carry out the method of any of claims 7 to 13.

15. The computer program product of claim 14, wherein the instructions are stored on a non-transitory computer-readable storage medium.

16. Use of the device of any of claims 1 to 6 for creating a torque map for motor control.
